(19) Europäisches Patentamt
European Patent Office
Office européen des brevets

(11) Numéro de publication: **0 335 050 A1**

(12) # DEMANDE DE BREVET EUROPEEN

(21) Numéro de dépôt: 88401930.8

(22) Date de dépôt: 25.07.88

(51) Int. Cl.⁴: **C08J 9/00 , A47L 13/16**

(30) Priorité: 30.03.88 FR 8804218

(43) Date de publication de la demande: 04.10.89 Bulletin 89/40

(84) Etats contractants désignés: AT BE CH DE ES GB IT LI LU NL

(71) Demandeur: SPONTEX ,Société anonyme dite
24, rue des Jeûneurs
F-75081 Paris Cedex 02(FR)

(72) Inventeur: Colin, Claudine
3, rue Henri Barbusse
F-60290 Rantigny(FR)
Inventeur: Wertz, Jean-Luc
8, rue Sainte Angadrême
F-60000 Beauvais(FR)

(74) Mandataire: Gillard, Marie-Louise et al
Cabinet Beau de Loménie 55, Rue d'Amsterdam
F-75008 Paris(FR)

(54) **Matériau cellulosique alvéolaire essuyant.**

(57) L'invention concerne un matériau cellulosique alvéolaire essuyant constitué d'un substrat cellulosique alvéolaire revêtu, sur au moins l'une de ses faces, d'une mousse expansée de latex obtenue à partir d'une composition aqueuse de latex ayant une viscosité, mesurée à 20° C sous 65 % d'humidité, comprise entre 2500 et 3500 mPa.s et dont la densité de mousse est comprise entre 250 et 400 g/l.

Application : Matériau absorbant et essuyant pour le nettoyage.

EP 0 335 050 A1

# MATERIAU CELLULOSIQUE ALVEOLAIRE ESSUYANT

La présente invention concerne le domaine du nettoyage et a pour objet un matériau cellulosique alvéolaire essuyant.

Les matériaux cellulosiques alvéolaires, à savoir les éponges cellulosiques sont des matériaux uniques en leur genre, qui, du fait de leur hydrophilie et de leur nature alvéolaire, absorbent très rapidement de très grandes quantités d'eau, en général 15 à 20 fois leur poids sec. Cette eau est par contre très rapidement relarguée par simple pression manuelle dudit matériau. La pression manuelle permet d'abaisser la teneur en eau du matériau cellulosique à un minimum de un à deux fois son poids d'eau. Le contact direct de la cellulose humide avec la surface à essuyer donne un essuyage médiocre caractérisé par la présence de gouttes d'eau laissées sur cette surface (vitres, carrelages, sanitaires, etc...).

Les matériaux cellulosiques secs, tels que les papiers jetables permettent d'obtenir une bonne qualité d'essuyage caractérisée par une absence de gouttes d'eau visibles à l'oeil nu, tant que la quantité d'eau absorbée ne dépasse pas le poids de cellulose sèche. Au delà de cette quantité d'eau, il est nécessaire de changer de papier.

Les matériaux cellulosiques alvéolaires utilisés comme matériaux de nettoyage sont donc essentiellement employés à l'heure actuelle pour leurs propriétés absorbantes.

Les autres matériaux de nettoyage connus pour leurs propriétés essuyantes tels que les produits cellulosiques secs, papiers, chiffons, non tissés... et les peaux dites "chamoisées" synthétiques ou naturelles possèdent par contre des propriétés absorbantes médiocres.

Le matériau cellulosique alvéolaire essuyant selon l'invention est un matériau constitué d'un substrat cellulosique alvéolaire revêtu sur au moins l'une de ses faces d'une mousse expansée de latex qui présente à la fois des propriétés absorbantes et des propriétés essuyantes.

La présente invention concerne également un procédé pour l'obtention dudit matériau cellulosique alvéolaire qui comprend les étapes de :

1) formation d'une composition aqueuse de latex ayant une viscosité comprise entre 2500 et 3500 mPa.s ;

2) expansion de ladite composition en une mousse ayant une densité comprise entre 250 et 400 g/l,

3) enduction du substrat cellulosique avec cette mousse ;

4) traitement thermique pour fixer et réticuler la mousse sur le substrat cellulosique.

Le substrat cellulosique, qui constitue l'un des éléments du matériau selon l'invention, peut être un matériau cellulosique alvéolaire quelconque couramment utilisé pour la fabrication des éponges ou des toile-éponges et notamment les produits fabriqués à partir de pâte de bois mise en solution par le procédé viscose en passant par le dérivé xanthate avec adjonction de porophores et suivi d'une régénération thermique ou acide.

On peut citer également les procédés de mise en solution de la cellulose dans des solvants ou le procédé carbamate avec adjonction de porophores et précipitation de la cellulose.

On obtient, par ces procédés bien connus de l'homme du métier, des matériaux cellulosiques alvéolaires dont la densité est en général comprise entre 10 et 150 g/l et dont la porosité est comprise en général entre 10 et 5000 $\mu$m.

Les matériaux cellulosiques alvéolaires utilisés comme substrats cellulosiques selon l'invention peuvent contenir un rétenteur d'eau, tel que par exemple le chlorure de magnésium ou un glycol.

La composition aqueuse de latex expansée est constituée d'un latex, d'un agent moussant, d'un agent coagulant, d'un épaississant et éventuellement d'agents auxiliaires, tels que notamment des agents de vulcanisation, des charges, des pigments, des agents émulsifiants, des agents de coalescence et un catalyseur.

La composition de latex mise en oeuvre pour l'obtention de la mousse expansée comprend, en poids, par rapport au poids total de la composition :

- au moins 50 % d'un latex souple et possédant des groupes réactifs thermosensibles ou réticulants,
- 0,05 à 0,15 % d'un agent moussant ;
- 0 à 5% d'un agent coagulant permettant la filmification du latex ou sa coagulation après expansion sous forme de mousse ;
- 2 à 20 % d'un agent épaississant.

Le latex mis en oeuvre est un latex souple qui doit être résistant à l'eau, aux corps gras et à l'abrasion et possède des groupes thermosensibles ou autoréticulants, permettant la réticulation du latex entre 40 et

150 ° C. Il doit présenter une bonne affinité chimique avec la cellulose.

Les latex particulièrement appropriés aux fins de l'invention sont les latex de nature butadiène-styrène ou de nature nitrile qui possèdent, de façon récurrente, l'un des motifs I ou II ci-après :

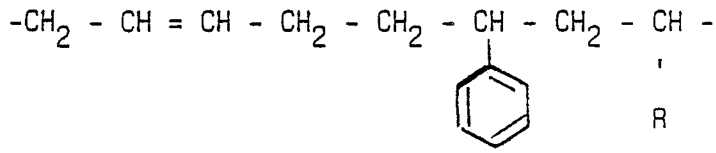

(I)

dans lequel R est en général un groupe carboxyle ;

$-CH_2 - CH = CH - CH_2 - CH_2 - CH \quad - CH_2 - CH \quad -$ (II)
CN R'

dans lequel R′ est un groupe carboxyle ou le groupe N-méthylol-acryl-amide

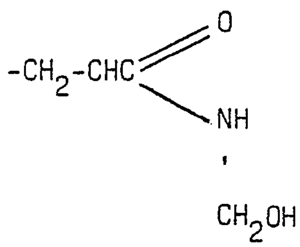

Les latex nitriles sont préférés aux fins de l'invention du fait de leur résistance à l'eau et aux graisses et de leur résistance à l'usure et au vieillissement.

La viscosité de la composition aqueuse, les quantités d'agent moussant et d'agent coagulant, ainsi que la densité de la mousse sont des paramètres critiques.

L'agent moussant mis en oeuvre dans la composition de latex selon l'invention est un agent tensio-actif permettant de contrôler la dispersion et l'homogénéité de la répartition des bulles d'air emprisonnées dans la composition aqueuse de latex lors de l'expansion par agitation mécanique. Cet agent moussant peut être choisi parmi les sulfosuccinamates, les sels alcalins d'acides gras et les alkylsulfonates. On préfère tout particulièrement utiliser les sulfosuccinamates de sodium qui abaissent la tension de surface de l'eau contenue dans la composition aqueuse de latex et permet la formation d'une peau élastique qui fige la structure de la mousse.

La composition de latex selon l'invention contient également un agent coagulant pour abaisser le Tg (température de transition vitreuse) du latex ou le destabiliser en provoquant sa coagulation entre une température comprise entre 40 et 70 ° C.

L'agent coagulant peut être un agent coagulant quelconque couramment utilisé dans ce domaine, tel que par exemple les polyorganosiloxanes fonctionnels.

L'agent épaississant mis en oeuvre dans la composition aqueuse de latex est utilisé pour augmenter la viscosité de la composition aqueuse et la stabilité de celle-ci ainsi que celle de la mousse. Cet agent épaississant peut être notamment une dispersion de polymères acryliques. Il joue un rôle important dans l'interpénétration de la structure poreuse de la mousse dans le substrat cellulosique.

La composition aqueuse de latex peut en outre contenir des ingrédients auxiliaire qui sont :
- des pigments, dont l'utilisation permet de visualiser l'enduction totale du substrat cèllulosique ;
- un agent émulsifiant pour la mise en oeuvre d'ingrédients non solubles dans l'eau, telles que les charges comme les cires et les paraffines ;
- des charges destinées à diminuer le pouvoir collant de la mousse de latex, telles que les cires et les paraffines ;
- un agent de vulcanisation, tel que le soufre qui assure la réticulation totale ou partielle du latex. Sa présence n'est pas nécessaire lorsque le latex contient des groupes réactifs autoréticulants.
- un agent de coalescence de la famille des éthers ou des esters de glycol.
- un catalyseur pour accélérer la coagulation du latex, tel que le chlorure d'ammonium.

La quantité des différents ingrédients auxiliaires qui peuvent être utilisés aux fins de l'invention n'est pas critique et pourra aisément être déterminée par l'homme de métier, à l'aide d'essais de routine.

Toutefois, on indiquera ci-après, à titre d'exemples, non limitatifs deux compositions aqueuses de latex

appropriées aux fins de l'invention.

TABLEAU I

COMPOSITIONS AQUEUSES DE LATEX

| Composition \ Exemple | I (%) | II (%) |
|---|---|---|
| Latex (1) SBR (E.S. 43 %) | 85 | |
| Nitrile (E.S.(2) 41 %) | | 76 |
| Pigment | 0,4 | 2 |
| Agent moussant (E.S. 25 %) | 0,1 | 0,08 |
| Agent anti-tack (E.S. 60 %) | | 7,7 |
| Agent coagulant | 3,4 | 0,15 |
| Emulsifiant (E.S. 30 %) | 1,4 | 1,2 |
| Catalyseur (E.S. 10 %) | 0,4 | 0,7 |
| Epaississant (E.S. 50 %) | 9,3 | 12,17 |
| Viscosité (3) mPa.s | 3300 | 3I00 |

(1) SBR : latex styrène-butadiène

(2) E.S.: extrait sec

(3) viscosité mesurée avec un viscosimètre Haake de type VT03 avec le rotor n° 1 en atmosphère conditionnée (20° C, 65 % d'humidité relative).

La composition aqueuse de latex obtenue est expansée selon des procédés classiques bien connus de l'homme du métier. On réalise cette expansion, par exemple, dans un mousseur continu permettant d'atteindre une densité comprise entre 250 et 400 g/l.

Pour obtenir le matériau cellulosique alvéolaire essuyant, selon l'invention, il importe d'avoir une mousse stable à partir d'une composition aqueuse de latex, dont la viscosité est comprise entre 2500 et 3500 mPa.s, de préférence entre 3100 et 3300 mPa.s avec un pH voisin de 7,5 et 8,5. L'expansion de la composition aqueuse de latex conditionne la stabilité de la mousse et doit conduire à une densité de mousse comprise entre 250 et 400 g/l, et de préférence entre 340 à 370 g/l.

Il importe de choisir le matériel d'expansion, de manière à obtenir une répartition de la taille des pores de la mousse entre 50 et 500 µm. La stabilité de la mousse permet de conserver cette porosité, au cours de l'enduction et de la réticulation sur le substrat cellulosique.

En ce qui concerne la viscosité ($\eta$) et la densité (d) de la mousse, on a trouvé qu'une mousse très stable trop expansée ($\eta$ supérieure à 3500 mPa.s, d = 250 g/l) conduit à une mauvaise pénétration de la mousse sur le substrat cellulosique, à un délaminage de l'enduction sur la cellulose après réticulation

(faible adhésion mécanique). La mousse trop expansée n'a aucune cohésion et s'effrite.

De même, si la mousse est très stable et peu expansée ( = 3500mPa.s, d supérieure à 400 g/l) la pénétration de la mousse sur le substrat est insuffisante et la porosité de la mousse trop faible, ce qui empêche le passage de l'eau à travers la couche d'enduction vers le support absorbant. L'enduction fait alors barrière à la fonction d'absorption d'eau du substrat. Une faible viscosité et une faible expansion ($\eta$ inférieure à 2500 mPa.s, d = 400 g/l) ne permettent pas de conserver l'expansion au cours de l'enduction et de la réticulation de la composition aqueuse de latex. La porosité trop faible ou inexistante ne permet plus le passage de l'eau vers le support cellulosique. L'adhésion mécanique est par contre facilitée par une grande pénétration dans le support cellulosique.

Une faible viscosité et une expansion importante (inférieure à 2500 mPa.s, d $\approx$ 250 g/l ne conduit pas à l'obtention d'une mousse stable. L'expansion s'effondre et l'obtention d'une enduction poreuse (en général entre 50 et 500 µm) n'est plus possible.

L'optimum de stabilité pour la mousse et pour la conservation de la porosité est obtenu avec une viscosité comprise de préférence entre 3100 et 3300 mPa.s et une densité de mousse entre 340 et 370 g/l.

Après expansion de la mousse, on enduit le substrat cellulosique avec celle-ci selon des modes opératoires bien connus. On pourra utiliser par exemple un enducteur rouleau-râcle, un enducteur rouleau-rouleau ou un enducteur Storck sur cadre rotatif de sérigraphie.

A cette étape du procédé de fabrication du matériau cellulosique selon l'invention, la maîtrise des paramètres qui conditionnent l'adhésion et la couverture du substrat est un point clef de la qualité du produit fini (tenue mécanique - qualité d'essuyage). L'adhésion est liée à la pénétration de l'enduction dans l'éponge et à la mouillabilité de la cellulose avec la composition aqueuse.

Il est essentiel que la teneur en eau du substrat cellulosique soit comprise entre 50 % et 300 % d'eau en poids par rapport au poids de cellulose et de préférence entre 80 % et 150 %.

En dessous de 50 % d'eau dans l'éponge, la cellulose avide d'eau deshydrate très rapidement la mousse expansée lors de l'enduction, ce qui provoque la filmification rapide du latex et l'effondrement de la porosité.

Au delà de 300 % en eau, la pénétration de la mousse est freinée par l'eau qui fait barrière au mouillage de la cellulose par le latex. Une forte teneur en eau dans l'éponge entraîne une dilution de la mousse expansée, ce qui casse sa stabilité et provoque l'effondrement de l'expansion. On préférera une teneur en eau de 80 % à 150 %, gamme dans laquelle la pénétration et l'adhésion sont optimisées sans altérer les quantités déposées.

D'autre part, le substrat cellulosique peut éventuellement contenir un agent tensio-actif afin d'améliorer l'affinité chimique de la composition aqueuse expansée et du substrat cellulosique. Cet agent tensio-actif peut être choisi par exemple dans la famille des ammonium quaternaires.

Cet agent tensio-actif a également pour rôle de faciliter le gonflement de la cellulose, ce qui favorise la migration de la composition aqueuse dans la structure poreuse de l'éponge et dans la structure fibrillaire de la cellulose.

La teneur en agent tensio-actif peut varier entre 0 et 3 %. Au delà de 3 %, l'agent tensio-actif a une action inverse et est défavorable à l'adhésion.

La pression lors de l'enduction doit être en général comprise entre 0 et 750N/m$^2$ ; elle doit faciliter la pénétration de la mousse dans le substrat cellulosique sans écraser celle-ci. On choisira, de préférence, une pression comprise entre 0 et 200 N/m$^2$.

La quantité de mousse déposée doit permettre d'obtenir un bon accrochage sur le substrat cellulosique et un éloignement de la cellulose de la surface à essuyer par une couverture totale du substrat. Le grammage déposé en poids sec se situe favorablement entre 40 et 250 g/m$^2$ et dépend essentiellement de la porosité de l'éponge cellulosique. Par exemple, on peut indiquer que pour une éponge de porosité comprise entre 10 et 1000 µm, le dépôt optimum se situe entre 80 et 100 g/m$^2$ et pour une éponge de porosité comprise entre 10 et 5000 µm, le dépôt optimum se situe entre 100 et 180 g/m$^2$.

Une fois le substrat cellulosique enduit avec la mousse expansée, le produit est soumis à un traitement thermique, qui est avantageusement constitué d'un flash thermique par exemple sous panneaux infra-rouge pour gélifier et figer la mousse, puis d'un traitement thermique à air chaud, pour réticuler le latex.

La gélification de la mousse se fait entre 40° C et 80° C selon la nature du latex et la quantité d'agent coagulant. La durée du traitement est choisie entre 20 et 60 secondes, en fonction de la teneur en eau de la composition aqueuse de la quantité déposée. Cette opération permet de figer la structure de la mousse et de manipuler le produit enduit sans risque d'effondrement de la porosité de la mousse. En dessous de 20 secondes de traitement infra-rouge, la structure de la mousse est insuffisamment figée et s'affaisse au cours du traitement thermique sous la pression d'air chaud. Au delà de 60 secondes, la température en surface de la mousse réticule le latex à la surface immédiate de cette mousse, en fermant la porosité de

surface. La croûte dure et cassante créée, empêche l'évaporation de l'eau de la mousse au cours du traitement thermique. Lors de l'étape de réticulation, le traitement thermique doit permettre une montée en température du substrat à 100° C (environ en 1 min) puis la réticulation de latex au delà de 120° C et de préférence, entre 120° C et 130° C pendant deux minutes au moins, et de préférence de 2 à 10 minutes.

Une fois le produit traité thermiquement, un agent anti-tack pourra être déposé en surface pour permettre l'enroulement éventuel du produit, en évitant le collage de l'enduction sur elle-même ou sur l'éponge . On peut utiliser les agents anti-tack classiques et notamment le stéarate d'ammonium en dispersion.

L'enduction de la matière cellulosique à l'aide de la mousse de latex, selon l'invention permet de faire barrière au relargage de l'eau absorbée jusqu'à une absorption d'eau 4 fois supérieure au poids de la matière cellulosique sèche.

Au delà et jusqu'à une absorption de 15 à 20 fois le poids de la matière cellulosique, le support cellulosique relargue l'eau très rapidement.

Au cours de l'utilisation, le matériau cellulosique selon l'invention doit être, après l'absorption de l'eau, comprimé manuellement pour abaisser la teneur en eau à une ou deux fois environ le poids de la cellulose.

Cette opération suffit alors pour réaliser dans un deuxième temps un essuyage sans trace sans avoir recours à un produit cellulosique sec (papier ou chiffon) ou à une peau chamoisée.

Alors qu'une éponge cellulosique classique laisse sur la surface traitée des gouttes d'eau de quelques millimètres de diamètre et plus, le matériau cellulosique selon l'invention, permet d'obtenir une surface parfaitement nette.

Sans pour autant vouloir se lier à une quelconque théorie, on pense que la couche de latex dans le matériau cellulosique selon l'invention, sans inhiber la fonction de la matière cellulosique, véhicule l'eau par capillarité vers le substrat cellulosique et provoque la dispersion en fines gouttelettes de l'eau sur la surface à essuyer. L'eau ainsi dispersée s'évapore alors naturellement sans laisser de traces sous l'effet de la tension de vapeur.

L'enduction sur les deux faces d'une éponge cellulosique plate ne nuit en rien à la capacité d'absorption du substrat cellulosique.

L'invention va être maintenant décrite plus en détail par les exemples ci-après dans lesquels on a utilisé comme compositions aqueuses de latex les compositions figurant au Tableau I.

EXEMPLE 1 : Toile-éponge essuyante

Le substrat cellulosique choisi était constitué d'un produit plat ou toile-éponge cellulosique de grammage 180 g/m$^2$, de 3 mm d'épaisseur, de porosité moyenne 10 à 1000 $\mu$m, ayant une teneur en eau de 100 %.

L'enduction a été réalisée à partir des compositions aqueuses de latex expansées décrites précédemmeent dans les conditions suivantes :

- densité de mousse : 340-370 g/l ;
- pression à l'enduction : 0 à 200 N/m$^2$;
- dépôt : 90 à 100 g/m$^2$ ;
- passage sous panneaux infra-rouge : 30 secondes entre 45° C et 60° C ;
- traitement thermique à air chaud : 1 minute à 100° C
- traitement thermique à air chaud 4 : minutes à 130° C.

Les performances du produit sont reportées dans le tableau II, ainsi que celles du substrat cellulosique de départ.

TABLEAU II

| TOILE-EPONGE ESSUYANTE | | |
|---|---|---|
| - Porosité moyenne 10 à 1000 m<br>- Format 20 cm x 20 cm | | |
| - | Substrat cellulosique de départ | Toile-éponge essuyante |
| Force de rupture (N)<br>Norme EDANA 20-1-73<br>Résistance à la déchirure (N)<br>Norme EDANA 70-1-75 | L 20 - 27<br>l 11 - 17<br>L 17 - 27<br>l 33 - 43 | L 26 - 32<br>l 14 - 20<br>L 18 - 28<br>l 34 - 44 |
| Perte en poids à l'usure (mg) | | |
| Abrasimètre Hoboken . face enduite<br>. face éponge<br>Capacité d'absorption d'eau (g)<br>" " (%) (a) | /<br>10 - 12<br>100 - 120<br>1400 - 1700 | 4,5 - 6,5<br>10 - 12<br>100 - 120<br>850 - 1000 |

a) % par rapport au poids du produit sec.

Les performances d'absorption d'eau entre la toile-éponge essuyante et une peau de chamois naturelle de même format (20 cm x 20 cm) sont reportées dans le tableau III.

TABLEAU III

| COMPARAISON TOILE-EPONGE ESSUYANTE / PEAU DE CHAMOIS | | |
|---|---|---|
| | Toile-éponge essuyante | Peau de chamois (format 20 x 20) |
| Capacité d'absorption d'eau (g)<br>" "(%) (a)<br>Vitesse d'absorption (sec.)<br>Norme EDANA 10-1-72A | 100 - 120<br>850 - 1000<br>1 à 4 | 55 - 75<br>500 - 600<br>1020 à 1140<br>(17 à 19 min) |

(a) par rapport au poids du produit sec.

EXEMPLE 2 : EPONGE CELLULOSIQUE ESSUYANTE

Le substrat cellulosique choisi avait un grammage de 740 g/m$^2$, une épaisseur de 23 mm, une porosité moyenne de 10 à 5000 $\mu$m et une teneur en eau et 200 %.

La composition aqueuse de latex expansée a été enduite dans les conditions suivantes :

- densité de mousse : 340 - 370 g/l ;
- pression à l'enduction : 0 à 200 N/m$^2$ ;
- dépôt : 130 - 140 g/m$^2$ en poids sec

Le traitement thermique du produit enduit a été de 40 secondes entre 45° C et 60° C sous panneaux infra-rouge suivi d'un traitement thermique à air chaud de 1 minute à 100° C puis de 6 minutes à 130 ° C.

Les performances du produit ramenées à 3 mm d'épaisseur pour les tests sont reportées dans le tableau IV, ainsi que celles du substrat cellulosique de départ.

TABLEAU IV

| EPONGE ESSUYANTE | | |
|---|---|---|
| Porosité moyenne 10 à 5000 m. L'échantillon de format 11 cm x 7 cm par 2,3 cm d'épaisseur a été ramené à 0,3 cm d'épaisseur pour l'ensemble des tests. | | |
| | Substrat cellulosique (épaisseur 3 mm) | Eponge essuyante (épaisseur 3mm) |
| Force de rupture (N) Norme EDAMA 20-1-73 | 11 - 17 | 30 - 37 |
| Résistance à la déchirure (N) Norme EDAMA 70-1-75 | 12 - 22 | 12 - 22 |
| Perte en poids à l'usure (mg) | | |
| Abrasimètre Hoboken . face enduite | / | 2 - 8 |
| . face éponge | 20 - 30 | 20 - 30 |
| Capacité d'absorption d'eau (g) | 17 - 20 | 16 - 21 |
| " " (%) (a) | 1800-2500 | 1700 - 2200 |

a) par rapport au poids du produit sec.

Les performances d'absorption d'eau comparées de l'éponge essuyante et d'une peau de chamois de même format (11 cm x 7 cm) sont reportées dans le tableau V.

TABLEAU V

| COMPARAISON EPONGE ESSUYANTE / PEAU DE CHAMOIS | | |
|---|---|---|
| | Eponge essuyante format 11 x 7 x 2,3 | Peau de chamois (format 11 x 7) |
| Capacité d'absorption d'eau (g) | 160 - 170 | 5 - 15 |
| " " (%) (a) | 1700 - 2200 | 500 - 600 |
| Vitesse d'absorption (sec) Norme EDANA 10-1-72A | 1 à 4 | 1020 à 1140 (17 à 19min) |

a) par rapport au poids du produit sec.

## Revendications

1. Matériau cellulosique alvéolaire essuyant, caractérisé en ce qu'il comprend un substrat cellulosique alvéolaire revêtu, sur au moins l'une de ses faces, d'une mousse expansée de latex obtenue à partir d'une composition aqueuse de latex ayant une viscosité mesurée à 20° C et sous 65 % d'humidité relative, comprise entre 2500 et 3500 mPa.s et de préférence, entre 3100 et et 3300 mPa.s et dont la densité de mousse est comprise entre 250 et 400 g/l et de préférence entre 240 et 370 g/l.

2. Matériau cellulosique selon la revendication 1, caractérisé en ce que la mousse de latex est obtenue par expansion d'une composition aqueuse de latex comprenant, en poids, par rapport au poids total de la composition :

- au moins 50 % d'un latex souple et contenant des groupes réactifs thermosensibles ou autoréticulants,
- 0,05 à 0,15 % d'un agent moussant;
- 0 à 5 % d'un agent coagulant ;
- 2 à 20 % d'un agent épaississant.

3. Matériau cellulosique selon la revendication 2, caractérisé en ce que le latex est un latex butadiène-styrène ou un latex nitrile.

4. Matériau cellulosique selon la revendication 4, caractérisé en ce que l'agent moussant est choisi parmi les sulfosuccinamates, les sels alcalins d'acides gras et ces alkylsulfonates.

5. Matériau cellulosique selon la revendication 2, caractérisé en ce que l'agent coagulant est choisi parmi les polyorganosiloxanes fonctionnels.

6. Matériau cellulosique selon la revendication 2, caractérisé en ce que l'agent épaississant est choisi parmi les dispersions de polymères acryliques.

7. Procédé pour l'obtention d'un matériau cellulosique alvéolaire essuyant selon l'une quelconque des revendications 1 à 6, caractérisé en ce qu'il comprend les étapes de :

1) formation d'une composition aqueuse de latex de viscosité comprise entre 2500 et 3500 mPa.s et de préférence entre 3100 et 3300 mPa.s.

2) expansion de ladite composition en une mousse de densité comprise entre 250 et 400 g/l et de préférence de 340 à 370 g/l et dont la porosité moyenne entre 50 à 500 µm ;

3) enduction du substrat cellulosique à l'aide de cette mousse, ledit substrat ayant une teneur en eau comprise entre 50 et 300 % ;

4) Traitement thermique pour fixer et réticuler le latex sur le substrat cellulosique.

8. Procédé selon la revendication 7, caractérisé en ce que la pression lors de l'enduction est comprise entre 0 et 750 $N/m^2$, et de préférence entre 0 et 200 $N/m^2$.

9. Procédé selon l'une des revendications 7 ou 8, caractérisé en ce que le substrat cellulosique a une porosité comprise entre 10 et 5000 µm.

10. Procédé selon l'une quelconque des revendications 7 à 9, caractérisé en ce que le substrat cellulosique contient 0 à 3 % d'un agent tensio-actif de type ammonium quaternaire.

11. Procédé selon l'une quelconque des revendications 7 à 10, caractérisé en ce que le traitement thermique comprend un flash thermique sous infra-rouge entre 40° C et 80° C pendant 20 à 60 secondes suivi d'un traitement thermique à air chaud entre 100 et 130° C pendant 2 à 10 minutes.

Office européen des brevets

# RAPPORT DE RECHERCHE EUROPEENNE

Numero de la demande

EP 88 40 1930

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | GB-A-2 039 279 (POLYSER INTERNATIONAL)<br>* Revendications 1-45 *<br>--- | 1 | C 08 J 9/00<br>A 47 L 13/16 |
| A | US-A-2 996 409 (LAVELY)<br>* Revendications 1-5 *<br>----- | 1 | |
| | | | **DOMAINES TECHNIQUES RECHERCHES (Int. Cl.4)** |
| | | | C 08 J<br>A 47 L<br>B 29 D |

Le présent rapport a été établi pour toutes les revendications

| Lieu de la recherche | Date d'achèvement de la recherche | Examinateur |
|---|---|---|
| LA HAYE | 10-01-1989 | OUDOT R. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)